# EUROPÄISCHE PATENTSCHRIFT

(11) **EP 0 872 660 B1**
(45) Veröffentlichungstag und Bekanntmachung des Hinweises auf die Patenterteilung: **18.12.2002**
(21) Anmeldenummer: 98102062.1
(22) Anmeldetag: 06.02.1998
(51) Int. Cl.: F16D 65/16

(54) **Einrichtung zum Bedämpfen von Schwingungen an einem Bremsbelag einer Scheibenbremse**
Device for damping the vibrations of a disc brake pad
Dispositif d'amortissement des vibrations d'un patin de frein à disque

(30) Priorität: 19.04.1997 DE 19716570
(43) Veröffentlichungstag der Anmeldung: 21.10.1998
(73) Patentinhaber: Dr.Ing.h.c. F. Porsche Aktiengesellschaft, 70435 Stuttgart (DE)
(72) Erfinder: Martin, Roland, 71287 Weissach (DE)

(56) Entgegenhaltungen:
- FR-A- 2 574 507
- GB-A- 1 035 183
- US-A- 3 722 634
- US-A- 3 887 044
- US-A- 4 186 824
- US-A- 4 875 556

## Beschreibung

Die Erfindung bezieht sich auf eine Einrichtung zum Bedämpfen von Schwingungen an einem Bremsbelag einer Scheibenbremse nach dem Oberbegriff des Anspruchs 1.

Aus dem DE-Gbm 87 17 512 U1 ist eine Einrichtung zur Schwingungsdämpfung von Scheibenbremsen bekannt, bei der zwischen einer Belagträgerplatte und Bremskolben der Bremse Massekörper in Bohrungen der Bremskolben angeordnet sind. Diese Massekörper sind auf einer Zwischenplatte gehalten, welche mit der Belagträgerplatte verbunden ist.

Die FR 25 74 507 A1 zeigt eine Fahrzeugbremse mit einem im Bremskolben zur Schwingungsdämpfung angeordneten Element. Dieses schwingungsdämpfende Element ist mit einer Rückenplatte des Bremsbelages verbunden. Zur Abstützung an eine Innenfläche des Bremskolbens weist das schwingungsdämpfende Element außenseits mehrere erhöhte Längsrippen auf, die in engem Kontakt zu einer inneren Umfangsfläche des Bremskolbens stehen.

Aufgabe der Erfindung ist es, eine verbesserte Einrichtung zum Bedämpfen von Schwingungen an einer Scheibenbremse sowie zur Vermeidung eines Bremsenquietschens zu schaffen.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß durch ein Tilgerelement mit außenseitig erhabenen Reibflächen, in einer Bohrung des Bremskolbens angeordnet ist und bei auftretenden Schwingungen über dieses Tilgerelement eine wirksame Schwingungsdämpfung des Bremsbelages erzielbar ist. Dies wird im wesentlichen erreicht, durch eine Massenerhöhung infolge der Tilgermasse und einer Verbindung vom Bremsbelag zur Tilgermasse und zum Bremssattel. Desweiteren wird eine Schwingungsdämpfung durch die gedämpfte Lagerung der Tilgermasse über ein umfangseitig des Tilgerelements angeordnetes profiliertes Dämpfungsblech erzielt, das in einem reibenden Kontakt mit der Wandung der Bohrung im Bremskolben steht. Das profilierte Dämpfungsblech bewirkt, daß die axialen und tangentialen Belagschwingungen aktiv bedämpfbar sind.

In verschiedenen Ausgestaltungen der erhöhten Reibfläche auf dem Tilgerelement bei gleicher Dämpferwirkung können diese auch nur über Teilbereiche der Umfangsfläche des Tilgerelements angeordnet sein.

Die Tilgerelemente sind zur einfachen Montage auf einer Platte befestigt, wobei eine Platte mehrere Tilgerelemente oder auch nur ein Tilgerelement aufweisen kann. Eine Verbindung mit dem Bremsbelag erfolgt vorzugsweise über eine Klebefolie.

Die Reibflächen des Tilgerelements können aus sich axial oder umfangseitig erstreckenden Erhöhungen gebildet sein. Denkbar sind auch punktförmige Erhöhungen, die sich gleichmäßig über die Außenoberfläche des Tilgerelements erstrecken. Die Erhöhungen werden von einem entsprechend geformten Dämpfungsblech gebildet, welches zwischen den Erhöhungen und der Umfangsfläche des Tilgerelements jeweils einen Hohlraum aufweist. Die Dämpfungsbleche können beschichtet sein. Der Massentilger besteht vorzugsweise aus Stahl oder einem dämpfenden Werkstoff.

Ein Ausführungsbeispiel der Erfindung ist in der Zeichnung dargestellt und wird im folgenden näher beschrieben.

Es zeigen
- Fig. 1: eine schematisch dargestellte Bremse im Schnitt mit einem Tilgerelement in einer Bohrung eines Bremskolbens und
- Fig. 2: einen Schnitt nach der Linie II-II der Fig. 1.

Bei einer Scheibenbremse 1 sind in einem Bremssattel 2 Bremskolben 3 zur Betätigung von Bremsbelägen 4 geführt, die bei einem Bremsvorgang gegen einen Bremsring 5 der Bremsscheibe 6 gedrückt werden. Die Bremskolben 3 sind zu beiden Seiten der Bremsscheibe 6 angeordnet.

Der Bremskolben 3 ist mit einer Bohrung 7 versehen, in welche ein Tilgerelement 8 mit einer umfangsseitig angeordneten Reibfläche 9 gehalten ist.

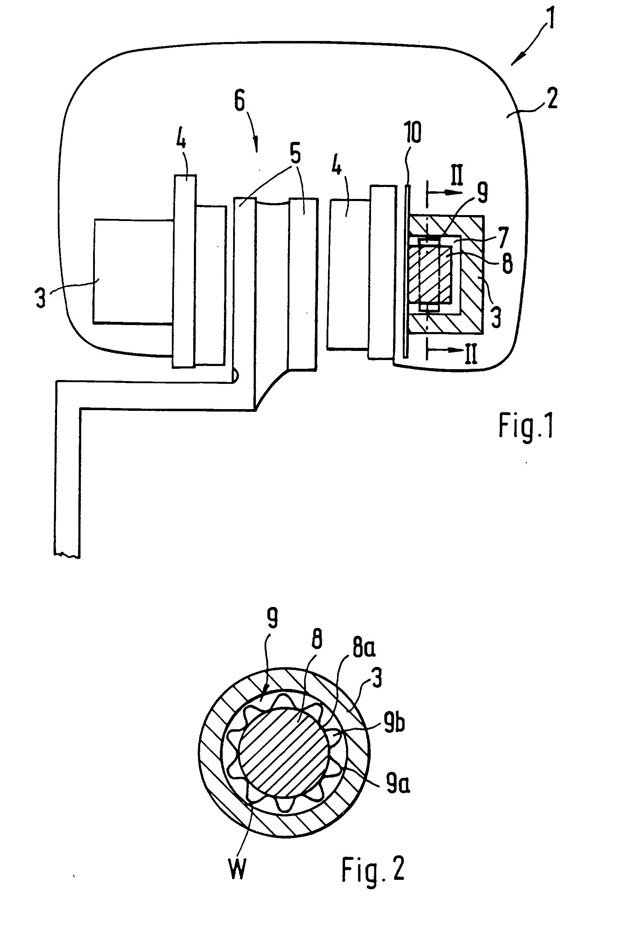

Diese Reibfläche 9 wird aus einem profilierten Dämpfungsblech gebildet, insbesondere aus einem Wellblech 9a, wie in Fig. 2 näher dargestellt. Dieses kann eine Beschichtung mit einem Dämmwerkstoff aufweisen.

Die Wellen des Bleches verlaufen vorzugsweise in axialer Richtung des Tilgerelements 8. Sie können aber auch in anderen Richtungen verlaufen, soweit die Dämpfungswirkung nicht nachteilig beeinflußt wird. Das Wellblech 9a ist auf das Tilgerelement 8 straff aufgezogen und/oder mit diesem durch eine Verklebung oder eine andere Verbindung befestigt.

Die Profilierungen können auch punktförmig ausgebildet sein. Auch ist eine Anordnung der Reibfläche nur über einen Teilbereich des Tilgerelements 8 möglich, d.h. daß nur ein Mittenbereich des Tilgerelementes 8 mit dem Wellblech versehen ist.

Zwischen den Erhöhungen des Wellblechs 9a und der Umfangsfläche des Tilgerelements 8 bilden sich Freiräume 9b, wodurch die Tilgermasse gedämpft gelagert ist. Hierdurch können die axialen und tangentialen Belagschwingungen aktiv bedämpft werden. Die auftretenden tangentialen und axialen Schwingungen sind mittels Pfeile in Fig. 1 dargestellt.

Das Tilgerelement 8 ist vorzugsweise auf einer Platte 10 befestigt, die mit dem Bremsbelag 4 verklebt sein kann. Die Platte 10 kann entsprechend der Anzahl der Bremskolben 3 mit Tilgerelementen 8 versehen sein. Auch kann für jeden Bremskolben 3 nur eine Platte 10 mit einem Tilgerelement 8 verwendet werden.

## Patentansprüche

1. Einrichtung zum Bedämpfen von Schwingungen an einem Bremsbelag einer Scheibenbremse, die zwischen dem Bremsbelag und dem Bremskolben der Scheibenbremse auf mindestens einer Platte angeordnet ist, wobei die Einrichtung aus einem zylindrischen Tilgerelement (8) besteht, das reibend bewegbar in mindestens einer Bohrung (7) des Bremskolbens (3) angeordnet ist und außenseitig eine Erhöhungen aufweisende Reibfläche (9) besitzt, **dadurch gekennzeichnet, daß** die Reibfläche (9) von einem profilierten Dämpfungsblech gebildet ist, das eine Außenoberfläche (8a) des Tilgerelements (8) umgibt.

2. Einrichtung Anspruch 1, **dadurch gekennzeichnet, daß** die Außenoberfläche (8a) des Tilgerelements (8) von einem Wellblech (9a) gebildet wird.

3. Einrichtung nach den Ansprüche 1 oder 2, **dadurch gekennzeichnet, daß** die Reibfläche (9) sich nur über einen Teilbereich des Tilgerelements (8) erstreckt.

4. Einrichtung nach den Ansprüchen 1, 2 oder 3, **dadurch gekennzeichnet, daß** die Reibfläche (9) eine elastische Beschichtung aufweist.

5. Einrichtung nach den Ansprüchen 1, 2, 3 oder 4, **dadurch gekennzeichnet, daß** die Profilierungen des Tilgerelementes (8) aus axial zum Tilgerelement (8) verlaufenden Erhöhungen gebildet sind.

## Claims

1. A device for damping vibrations on a brake pad of a disc brake, the device being arranged on at least one plate between the brake pad and the brake piston of the disc brake, wherein the device comprises a cylindrical damper member (8) which is arranged so as to be movable with friction in at least one bore (7) in the brake piston (3) and the outside of which has a friction face (9) comprising raised portions, **characterized in that** the friction face 9 is formed by a profiled damping sheet which surrounds an external surface (8a) of the damper member (8).

2. A device [according to] Claim 1, **characterized in that** the external surface (8a) of the damper member (8) is formed by a corrugated sheet (9a).

3. A device according to Claim 1 or 2, **characterized in that** the friction face (9) extends only over a partial region of the damper member (8).

4. A device according to Claim 1, 2 or 3, **characterized in that** the friction face (9) has a resilient coating.

5. A device according to Claim 1, 2, 3 or 4, **characterized in that** the profiles of the damper member (8) are formed from raised portions extending axially with respect to the damper member (8).

## Revendications

1. Dispositif pour combattre les vibrations sur une garniture de frein d'un frein à disque, qui est disposé entre la garniture de frein et le piston de frein du frein à disque sur au moins une plaque, le dispositif comprenant un élément amortisseur (8) cylindrique, qui est disposé de façon mobile avec frottement dans au moins un alésage (7) du piston de frein (3) et présente côté extérieur une surface de frottement (9) présentant des élévations, **caractérisé en ce que** la surface de frottement 9 est formée par la tôle d'amortissement profilée, qui entoure une surface extérieure (8a) de l'élément amortisseur (8).

2. Dispositif selon la revendication 1, **caractérisé en ce que** la surface extérieure (8a) de l'élément amortisseur (8) est constituée par une tôle ondulée (9a).

3. Dispositif selon les revendications 1 ou 2, **caractérisé en ce que** la surface de frottement (9) s'étend sur une zone partielle de l'élément amortisseur (8).

4. Dispositif selon les revendications 1, 2 ou 3, **caractérisé en ce que** la surface de frottement (9) présente un revêtement élastique.

5. Dispositif selon les revendications 1, 2, 3 ou 4, **caractérisé en ce que** les profilages de l'élément amortisseur (8) sont constitués d'élévations agencées axialement par rapport à l'élément amortisseur (8).
